(19) Europäisches Patentamt
European Patent Office
Office européen des brevets

(11) **EP 4 443 699 A1**

(12) **EUROPEAN PATENT APPLICATION**
published in accordance with Art. 153(4) EPC

(43) Date of publication:
**09.10.2024  Bulletin 2024/41**

(21) Application number: **22898220.3**

(22) Date of filing: **29.09.2022**

(51) International Patent Classification (IPC):
*H02J 13/00* (2006.01)  *G06Q 50/06* (2024.01)
*G06Q 50/26* (2024.01)  *H02J 3/00* (2006.01)
*H02J 3/38* (2006.01)

(52) Cooperative Patent Classification (CPC):
**G06Q 50/06; G06Q 50/26; H02J 3/00; H02J 3/38;**
**H02J 13/00;** Y04S 10/50

(86) International application number:
**PCT/JP2022/036336**

(87) International publication number:
**WO 2023/095435 (01.06.2023 Gazette 2023/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **29.11.2021  JP 2021193533**

(71) Applicant: **Hitachi, Ltd.**
**Tokyo 100-8280 (JP)**

(72) Inventors:
• **JO Mingyu**
**Tokyo 100-8280 (JP)**
• **SAITO Nao**
**Tokyo 100-8280 (JP)**
• **TAMAYO RUIZ Efrain Eduardo**
**Tokyo 100-8280 (JP)**

(74) Representative: **MERH-IP Matias Erny Reichl**
**Hoffmann**
**Patentanwälte PartG mbB**
**Paul-Heyse-Strasse 29**
**80336 München (DE)**

(54) **POWER PROCUREMENT PLAN CREATION SYSTEM, POWER PROCUREMENT PLAN CREATION METHOD, TRANSACTION SYSTEM, AND PROGRAM**

(57)     A power procurement plan creating system or the like that creates a proper power procurement plan is provided. A power procurement plan creating system (100) includes a control unit (20) that causes a display means (40) to display a power procurement plan adopting a combination of supply/procurement sources, the combination being selected based on a given evaluation index, from among a plurality of supply/procurement sources that are power supply sources. The evaluation index includes a degree of stability that indicates a degree of stable supply of power to a demand side. The control unit (20) displays the degree of stability on a display screen for displaying the power procurement plan.

EP 4 443 699 A1

# FIG. 1

30

INPUT MEANS

100

POWER PROCUREMENT PLAN
CREATING SYSTEM

20

CONTROL UNIT

PLAN INPUT UNIT — 21

22

DEMAND PROBABILITY
ESTIMATION UNIT

23

SUPPLY PROBABILITY
ESTIMATION UNIT

SUPPLY
COMBINATION UNIT — 24

PLAN
CREATING UNIT — 25

DISPLAY
CONTROL UNIT — 26

10

STORAGE
UNIT

DISPLAY MEANS — 40

## Description

Technical Field

The present invention relates to a power procurement plan creating system and the like.

Background Art

As a technique for assisting in creating a power procurement plan, for example, Patent Literature 1 describes a technique of determining an amount of procurement-power each procurement source supplies, based on "an evaluation index including a power procurement cost, a renewable energy ratio, or a non-carbon ratio".

Citation List

Patent Literature

PTL 1: JP 2021-39699 A

Summary of Invention

Technical Problem

For example, when the power demand side includes a mobile body, such as an electric vehicle, an actual demand-power value is likely to deviate from an initially predicted demand-power value, depending on various cases of operations of the mobile body, which include the possibility of an external event like traffic congestion affecting power demand. Besides, at power generation facilities that generate renewable energy, such as solar power and wind power, the amount of generated power (that is, supply-power) changes in many cases under the influence of weather changes. The technique described in Patent Literature 1 does not take into consideration such uncertainty of demand-power and supply-power in any particular form, thus leaving room for improvement in technical solutions.

An object of the present invention is to provide a power procurement plan creating system or the like that creates a proper power procurement plan.

Solution to Problem

In order to solve the above problem, a power procurement plan creating system according to the present invention includes a control unit that causes a display means to display a power procurement plan adopting a combination of supply/procurement sources, the combination being selected based on a given evaluation index, from among a plurality of supply/procurement sources that are power supply sources. The evaluation index includes a degree of stability that indicates a degree of stable supply of power to a demand side.

Advantageous Effects of Invention

According to the present invention, a power procurement plan creating system and the like that create a proper power procurement plan can be provided.

Brief Description of Drawings

[FIG. 1] FIG. 1 is a functional block diagram including a power procurement plan creating system according to a first embodiment.
[FIG. 2] FIG. 2 is an example of display of an input screen of the power procurement plan creating system according to the first embodiment.
[FIG. 3] FIG. 3 is a flowchart of a process by a demand probability estimation unit included in the power procurement plan creating system according to the first embodiment.
[FIG. 4] FIG. 4 is an explanatory diagram showing an example of demand performance data in the power procurement plan creating system according to the first embodiment.
[FIG. 5] FIG. 5 is an explanatory diagram showing an example of transition of an average demand and a standard deviation in the power procurement plan creating system according to the first embodiment.
[FIG. 6] FIG. 6 is an explanatory diagram showing an example of demand prediction data in the power procurement plan creating system according to the first embodiment.
[FIG. 7] FIG. 7 is a flowchart of a process by a supply probability estimation unit included in the power procurement plan creating system according to the first embodiment.
[FIG. 8] FIG. 8 is an explanatory diagram showing an example of supply performance data in the power procurement plan creating system according to the first embodiment.
[FIG. 9] FIG. 9 is an explanatory diagram showing an example of supply prediction data in the power procurement plan creating system according to the first embodiment.
[FIG. 10] FIG. 10 is a flowchart of a process by a supply combination unit included in the power procurement plan creating system according to the first embodiment.
[FIG. 11] FIG. 11 is a flowchart of a process by a plan creating unit included in the power procurement plan creating system according to the first embodiment.
[FIG. 12] FIG. 12 is an example of a display screen for displaying a power procurement plan created by the power procurement plan creating system according to the first embodiment.
[FIG. 13] FIG. 13 is a functional block diagram including a power procurement plan creating system according to a second embodiment.
[FIG. 14] FIG. 14 is an explanatory diagram showing an example of demand prediction data in the power procurement plan creating system according to the second embodiment.
[FIG. 15] FIG. 15 is an explanatory diagram showing a chargeable time and charging timing of a battery of a mobile body in the power procurement plan creating system according to the second embodiment.
[FIG. 16] FIG. 16 is a configuration diagram of a power procurement plan creating system and a dealing system according to a third embodiment.
[FIG. 17] FIG. 17 is an explanatory diagram showing an example of power amount division implemented by the power procurement plan creating system and the dealing system according to the third embodiment.

Description of Embodiments

<<First Embodiment>>

<Configuration of Power Procurement Plan Creating System>

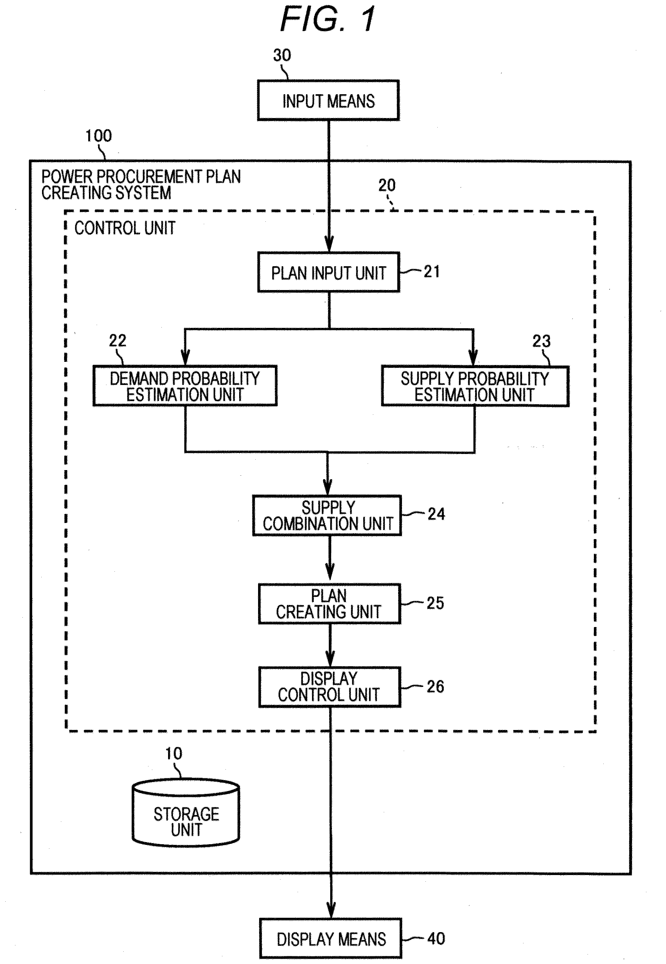

FIG. 1 is a functional block diagram including a power procurement plan creating system 100 according to a first embodiment.
The power procurement plan creating system 100 is a system that presents a future power procurement plan to a user, based on a given combination of supply/procurement sources, the combination being selected from among a plurality of supply/procurement sources (power generation facilities and storage batteries, which are not illustrated).
It should be noted that the above supply/procurement sources may include power generation facilities that generate renewable energy, such as solar power and wind power, and may include a cogeneration system using fossil fuel, a hydroelectric power generation facility, and a nuclear power generation facility as well. Further, the supply/procurement sources may also include a storage battery (not illustrated). On the other hand, consumers who receive power supplied from supply/procurement sources include, for example, office buildings and commercial facilities, and industrial facilities, ordinary houses, electric vehicle charging systems, etc., as well.
As shown in FIG. 1, the power procurement plan creating system 100 includes a storage unit 10 and a control unit 20. The storage unit 10 includes a non-volatile memory, such as a read-only memory (ROM) and a hard disk drive (HDD), and a volatile memory, such as a random access memory (RAM) and a register, both memories being not illustrated. In the storage unit 10, a given program is stored in advance, and data on demand-power and supply-power is properly stored as well.
The control unit 20, which is, for example, a central processing unit (CPU), reads a program out of the nonvolatile memory of the storage unit 10 and loads the program onto the volatile memory, thereby executing a given process. As a functional configuration required for such a process, the control unit 20 includes a plan input unit 21, a demand probability estimation unit 22, a supply probability estimation unit 23, a supply combination unit 24, a plan creating unit 25, and a display control unit 26, which are shown in FIG. 1.
As a result of a user's operation of an input means 30, the plan input unit 21 receives input of a given planning target period for which a power procurement plan is created and a given evaluation index used for creation of the power procurement plan. As the input means 30 shown in FIG. 1, for example, a keyboard (not illustrated) or a mouse (not illustrated) is used.
The demand probability estimation unit 22 divides a prediction value of a future demand-power amount into a stable demand-power amount and an uncertain demand-power amount, based on a plan value of a future demand-power amount and data on a past actual demand-power amount. "Stable" means that the possibility of power demand's arising in future is high. "Uncertain" means that whether power demand will arise in future is uncertain.
The supply probability estimation unit 23 divides a prediction value of a future supply-power amount into a stable supply-power amount and an uncertain supply-power amount, based on a plan value of a future supply-power amount and data on a past actual supply-power amount. The supply probability estimation unit 23 carries out this process on each of a plurality of supply/procurement sources. In the case of a power generation facility that generates renewable energy, its plan value of a future supply-power amount may be a supply-power amount that is predicted based on future weather forecast data.
The supply combination unit 24 makes a plurality of combinations of supply/procurement sources and calculates a given evaluation index for each combination. Details of the evaluation index will be described later.
The plan creating unit 25 extracts a combination meeting a given evaluation index condition, from among the plurality of combinations of supply/procurement sources made by the supply combination unit 24, and creates a future power procurement plan.
The display control unit 26 causes a display means 40 to display the power procurement plan created by the plan creating unit 25. For example, the display of a computer (not illustrated) is used as the display means 40. In other cases, the display of a terminal device (not illustrated), such as a smartphone, a mobile phone, or a tablet, may also be used as the display means 40. Processes carried out by respective components of the power procurement plan creating system 100 will then be described in order.

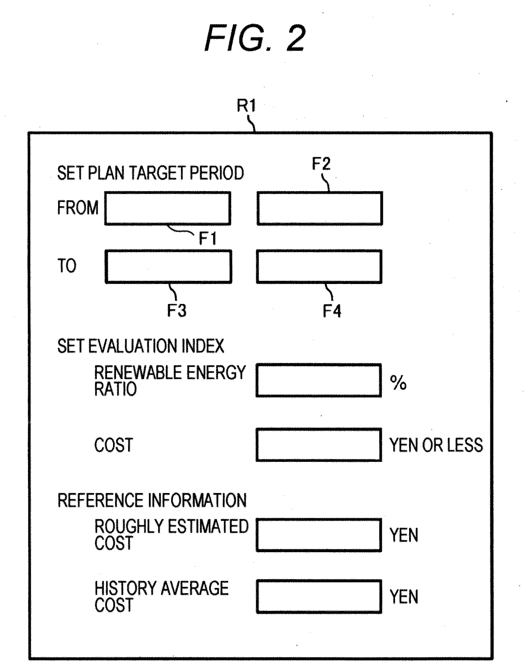

FIG. 2 is an example of display of an input screen R1 of the power procurement plan creating system (see also FIG. 1 when necessary).

A "Set planning target period" field shown in FIG. 2 is used when a given planning target period is inputted by the user's operation on the input means 30. In the example of FIG. 2, the start date and the start time of a planning target period are inputted to input boxes F1 and F2 of the "Set planning target period" field, respectively. Likewise, the end date and the end time of the planning target period are inputted to the other input boxes F3 and F4 of the "Set planning target period" field, respectively. The planning target period may be, for example, one day or several days. The time scale of the planning target period may be changed arbitrarily. For example, a time scale of one-hour interval may be adopted, or that of 30-minute interval or other intervals may also be adopted.

A "Set evaluation index" field shown in FIG. 2 is used for inputting evaluation indexes of a power procurement plan. As evaluation indexes, a renewable energy ratio and cost shown in FIG. 2 are used, and a degree of stability, which will be described later, is used as well. "Renewable energy ratio" is a ratio of a power amount supplied as renewable energy by a supply/procurement source to a total supply-power amount supplied to a consumer (demand side) in a given planning target period. A process of generating renewable energy hardly involves emission of a greenhouse gases, such as carbon dioxide. The higher the renewable energy ratio is, therefore, the higher the contribution to suppression of greenhouse gas emissions becomes.

To an input box for "cost " shown in FIG. 2, the user inputs a desired upper limit price as a total power charge in the planning target period. For example, the user may input "cost ", i.e., total power charge, based on his or her own experience, or may refer to a "roughly estimated cost" or an "average history cost" when inputting "cost".

The "roughly estimated cost" shown in FIG. 2 is a rough estimate of power cost that is calculated based on the planning target period and the renewable energy ratio. For example, the plan input unit 21 (see FIG. 1) predicts a demand-power amount the consumer demands in a given planning target period, and calculates a power amount of renewable energy and a power amount of non-renewable energy, both power amounts being included in a prediction value of the demand-power amount, based on a set value for the renewable energy ratio (see FIG. 2). Furthermore, the plan input unit 21 multiples the power amount of renewable energy by an average unit price, multiplies the power amount of non-renewable energy by a different average unit price, and sums up the multiplication results to calculate the "roughly estimated cost ".

"History average cost" shown in FIG. 2 is a power cost that is calculated based on past history data. For example, referring to past history data, the plan input unit 21 (see FIG. 1) calculates an average cost, based on the date corresponding to the planning target period or a date close to the planning target period, and displays the average cost as the "history average cost". Values inputted by the user's operations, such as the planning target period, the renewable energy ratio, and the cost, are stored in the storage unit 10 (see FIG. 1).

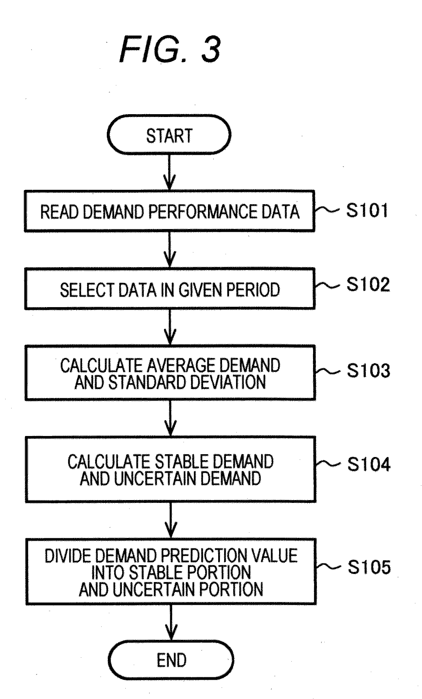

FIG. 3 is a flowchart of a process by the demand probability estimation unit (see also FIG. 1 when necessary).

It is assumed that at "START" in FIG. 3, demand performance data indicating a history of past demand-power is stored in the storage unit 10. At step S101, the control unit 20 reads demand performance data from the storage unit 10, using the demand probability estimation unit 22.

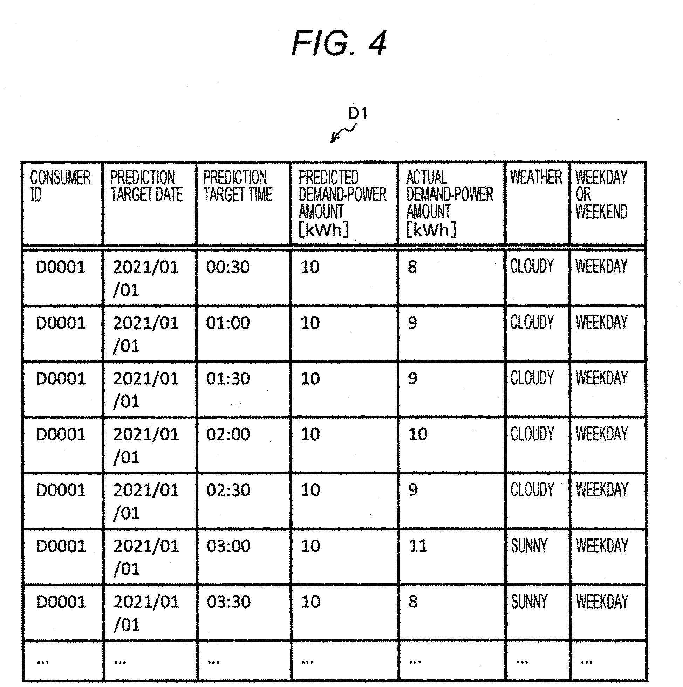

FIG. 4 is an explanatory diagram showing an example of demand performance data D1.

The demand performance data D1 shown in FIG. 4 is data indicating a history of demand-power demanded by a given consumer. "Prediction target date" and "prediction target time" shown in FIG. 4 represent a date and a time zone in which demand-power was predicted in the past. For example, for a time zone of 00:00 to 00:30 on January 1, 2021, a prediction target time in the time zone is indicated as "00: 30".

"Predicted demand-power amount" shown in FIG. 4 is a prediction value of a demand-power amount demanded by a given consumer. "Actual demand-power amount" is an actual value of the demand-power amount demanded by the given consumer. For example, in the time zone of 00:00 to 00:30 on January 1, 2021, a predicted demand-power amount is 10 [kWh] but an actual demand-power amount is 8 [kWh]. The demand performance data D1 also includes weather data in each time zone and data indicating a category of weekday or weekend (Saturday, Sunday, holiday, etc.) as well.

Subsequently, at step S102 of FIG. 3, the control unit 20 select data in a given period, from the demand performance data D1 (see FIG. 4), using the demand probability estimation unit 22. For example, the control unit 20 selects data in the last three years, from the demand performance data D1. Out of the data in the last three years, pieces of data having the same entries in the weekday or weekend category or a season category for a planning target date (planning target period) specified by the user may be selected. Furthermore, out of the data in the last three years, pieces of data having past weather entries matching predicted weather entries for the planning target date may be selected. In other words, out of the demand performance data in a given period in the past, the control unit 20 selects data indicating power being supplied under a situation similar to a situation where power is supplied on the planning target date.

Subsequently, at step S103 of FIG. 3, the control unit 20 calculates an average demand and a standard deviation, using the demand probability estimation unit 22. First, the control unit 20 calculates an average value (that is, average demand) of actual demand-power amounts in each time zone, using data selected at step S102. In a specific example, the control unit 20 extracts an actual demand-power amount in the time zone of 00:00 to 0:30 on January 1, 2021, the same on January 2, 2021,..., from the data selected at step S102. The control unit 20 then calculates an average value of actual demand-power amounts in individual time zones of 00:00 to 00:30.

In addition, for the time zone of 00:00 to 00:30, for example, the control unit 20 calculates a difference between a predicted demand-power amount and an actual demand-power amount and calculates a standard deviation, based on the calculated difference. This standard deviation is a numerical value indicating a degree of deviation of the actual demand-power amount from the predicted demand-power amount. For each time zone included in the planning target period (e.g., one day) set by the user, the control unit 20 calculates the average demand and the standard deviation.

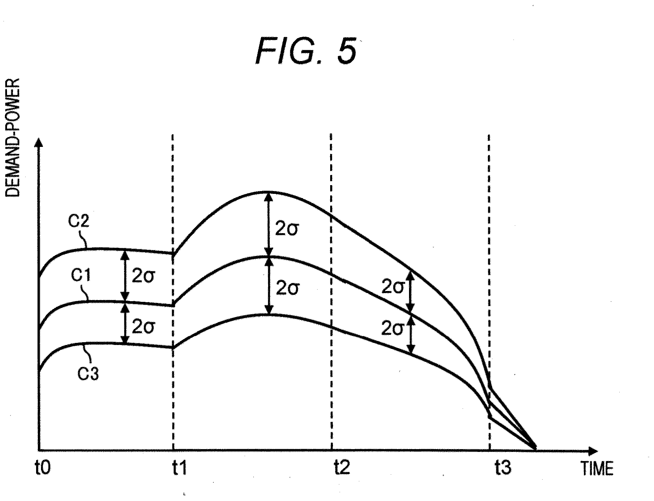

FIG. 5 is an explanatory diagram showing an example of transition of an average demand and a standard deviation.

In FIG. 5, the horizontal axis represents time, and the vertical axis represents demand-power. A curve C1 shown in FIG. 5 indicates the transition of the average demand. A curve C2 on the upper side is a curve given by adding $+2\sigma$ ($\sigma$: standard deviation) to an average demand at each point of time. A curve C3 on the lower side is a curve given by subtracting $2\sigma$ ($\sigma$: standard deviation) from the average demand at each point of time. An area sandwiched between these curves C2 and C3 is a section that statistically offers 95.4% reliability. As shown in FIG. 5, the average demand (curve C1) and the standard deviation $\sigma$ take different values in different time zones. In addition, as the uncertainty of an actual demand-power amount to a predicted demand-power amount (deviation of an actual demand-power amount from a predicted demand-power amount) increases, the standard deviation $\sigma$ increases.

FIG. 3 is referred to again for further description.

After calculating the average demand and the standard deviation at step S103, the control unit 20 calculates stable demand and uncertain demand at step S104, using the demand probability estimation unit 22. As described above, the average demand (curve C1 shown in FIG. 5) and the standard deviation $\sigma$ are calculated, based on pieces of data having the same entries in the season category, predicted weather category, weekday or weekend category, etc., for a future planning target period. It is therefore highly possible that in the future planning target period, demand-power will transition in the area sandwiched between the curves C2 and C3 of Fig. 5. It is also highly possible that at least the value of the curve C3 (average demand-$2\sigma$) is expected as a minimum demand-power at each point of time.

Thus, in the first embodiment, the value (curve C3) given by subtracting $2\sigma$ from the average demand (curve C1 shown in FIG. 5) is defined as "stable demand". Further, demand expressed as the difference between the curve C2 and the curve C3 shown in FIG. 5 is defined as "uncertain demand". With regard to demand-power in each time zone included in the planning target period, the control unit 20 calculates "stable demand" and "uncertain demand" (S104).

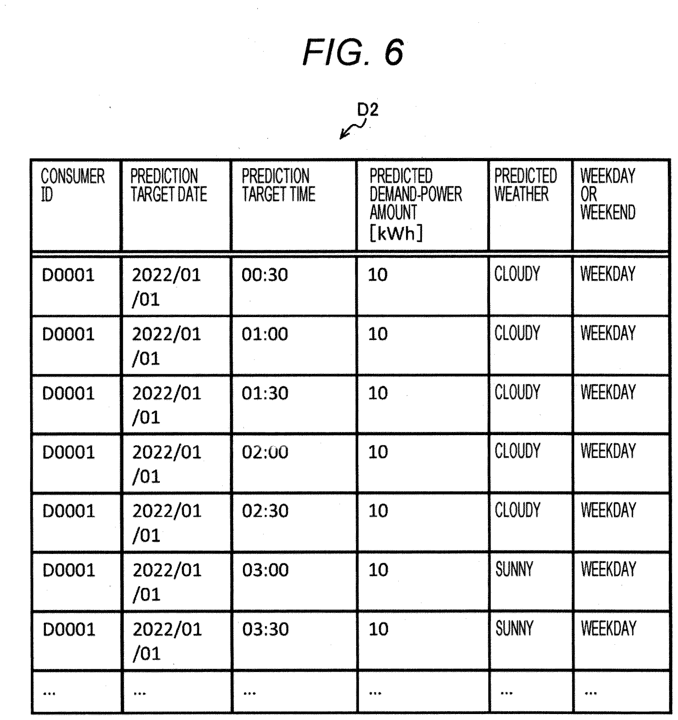

FIG. 6 is an explanatory diagram showing an example of demand prediction data D2.

It should be noted that the demand prediction data D2 shown in FIG. 6 is data indicating a prediction value of demand-power at a future point (e.g., 2022) to a point of time (e.g., 2021) at which a power procurement plan is created, and that the demand prediction data D2 is stored in the storage unit 10 (see FIG. 1). In the example of FIG. 6, a given consumer identified by a consumer ID is associated with categories of prediction target date, prediction target time, predicted demand-power amount in each time zone, predicted weather, and weekday or weekend.

At step S105 of FIG. 3, the control unit 20 divides a demand prediction value (predicted demand-power amount in each time zone) into a stable portion and an uncertain portion, using the demand probability estimation unit 22. For example, a case is assumed where a predicted demand-power amount in a given time zone is a value A. When this value A is larger than the "stable demand" (curve C3 shown in FIG. 5) based on past demand performance data, the control unit 20 specifies a portion of predicted demand-power amount that the "stable demand" accounts for, as a "stable portion" and specifies a portion of the same that exceeds the "stable demand", as an "uncertain portion". The "stable portion" is a portion of predicted demand-power amount where the possibility of power demand's arising is high. In contrast, the "uncertain portion" is a portion of predicted demand-power amount where whether power demand will arise is uncertain.

In another case where, for example, the value A of the predicted demand-power amount is equal to or smaller than the "stable demand" (curve C3 shown FIG. 5), the control unit 20 specifies the whole value A of the predicted demand-power amount, as the "stable portion". This is done because, as described above, when past demand performance data is taken into consideration, such a value A provides a high possibility of stable demand's arising.

Here is a specific example. In FIG. 6, a predicted demand-power amount from 00:00 to 00:30 on January 1, 2022 (a prediction target time is 00: 30) is 10 [kWh]. For example, when the "stable demand" between 00:00 and 00:30 is specified as 8 [kWh], based on past demand performance data, the control unit 20 calculates a 8 [kWh] portion of the predicted demand-power amount of 10 [kWh], as a "stable portion", while calculates the remaining 2 [kWh] portion, as an "uncertain portion".

Further, when the "stable demand" between 00:00 and 00:30 is specified as 11 [kWh], based on the past demand performance data, the control unit 20 specifies the whole predicted demand-power amount of 10 [kWh], as a "stable portion". In this manner, for each time zone included in the planning target period, the control unit 20 divides the predicted demand-power amount into the "stable portion" and the "uncertain portion" (S105 in FIG. 3).

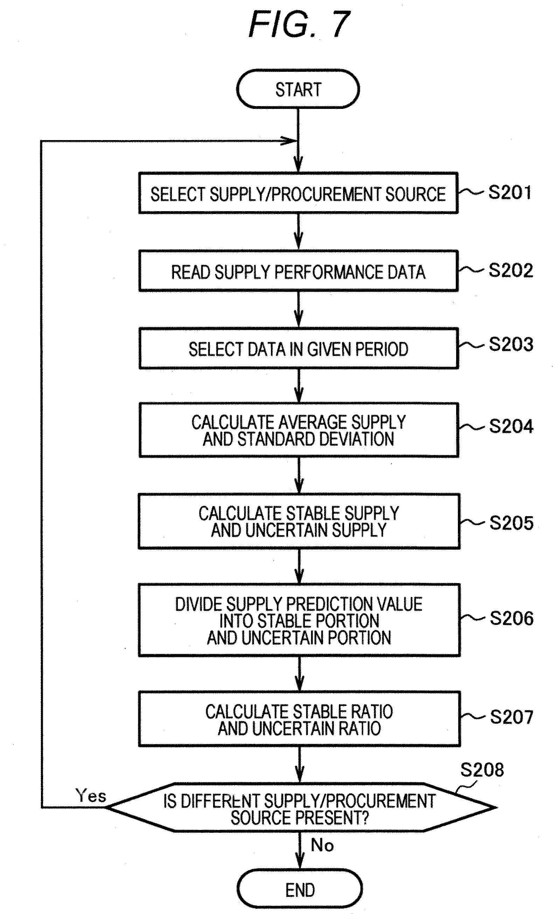

FIG. 7 is a flowchart of a process by the supply probability estimation unit (see also FIG. 1 when necessary) .

It is assumed that at "START" in FIG. 7, supply performance data indicating a history of supply-power supplied from each supply/procurement source is stored in the storage unit 10 (see FIG. 1).

At step S201, the control unit 20 selects a given supply/procurement source, using the supply probability estimation unit 23. It should be noted that a plurality of supply/procurement sources are set in advance as candidates to be selected when a power procurement plan is worked out.

Subsequently, at step S202, the control unit 20 reads the supply performance data from the storage unit 10, using the supply probability estimation unit 23.

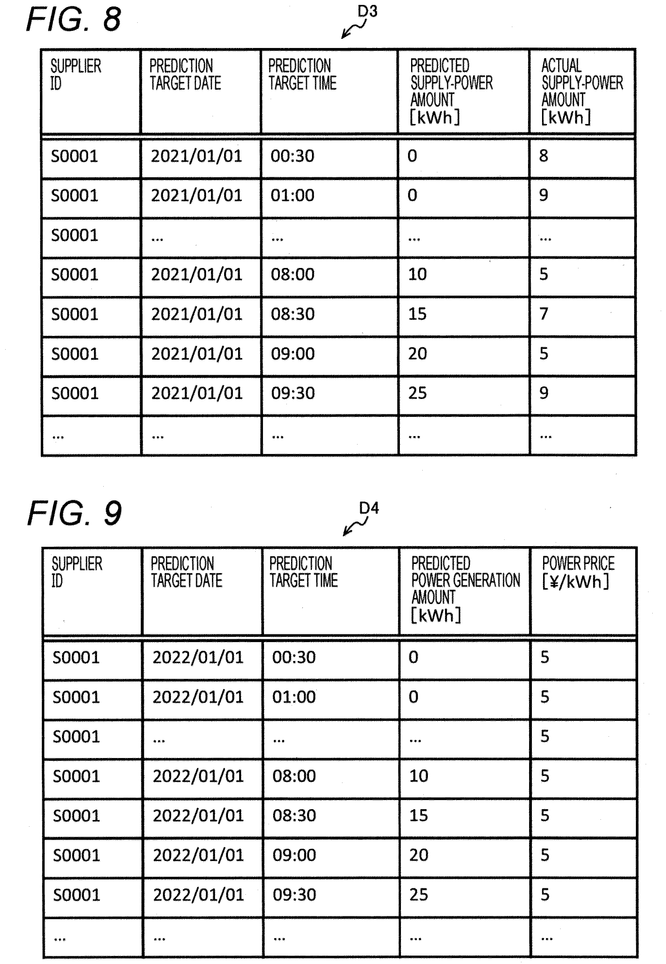

FIG. 8 is an explanatory diagram showing an example of supply performance data D3.

The supply performance data D3 shown in FIG. 8 is data indicating a history of supply-power supplied from a given supply/procurement source to a consumer. In the example of FIG. 8, a given supply/procurement source identified by a supplier ID is associated with categories of prediction target date, prediction target time, predicted supply-power amount in each time zone, and actual supply-power amount.

At step S203 of FIG. 7, the control unit 20 selects data in a given period, from the supply performance data D3, using the supply probability estimation unit 23. For example, the control unit 20 selects data in the last three years, from the supply performance data D3. The above given period (e.g., the last three years) may be identical with or different from the given period that is specified when data in the given period is selected from the demand performance data (S102 in FIG. 3).

At step S204, the control unit 20 calculates an average supply and a standard deviation, using the supply probability estimation unit 23. First, the control unit 20 calculates an average value (that is, average supply) of actual supply-power amounts in each time zone, using data selected at step S203. The control unit 20 calculates a difference between a predicted supply-power amount and an actual supply-power amount and calculates a standard deviation, based on the calculated difference.

At step S205, the control unit 20 calculates stable supply and uncertain supply, using the supply probability estimation unit 23. The "stable supply" refers to a portion of power with a high possibility of being supplied, the portion of power being a portion of an amount of power supplied from a given supply/procurement source to a consumer. The "uncertain supply " refers to a portion of power with uncertainty of whether being supplied or not, the portion of power being a portion of the amount of power supplied from the given supply/procurement source to the consumer. A process at step S205 is similar to the process at step S104 related to demand-power (see FIGS. 3 and 5), and is therefore omitted in further description.

FIG. 9 is an explanatory diagram showing an example of supply prediction data D4.

It should be noted that the demand prediction data D4 shown in FIG. 9 is data indicating a prediction value of supply-power at a future point (e.g., 2022) to a point of time (e.g., 2021) at which a power procurement plan is created, and that the supply prediction data D4 is stored in the storage unit 10 (see FIG. 1). In the example of FIG. 9, a given supply/procurement source identified by a supplier ID is associated with categories of prediction target date, prediction target time, predicted power generation amount in each time zone, and power price.

At step S206 of FIG. 7, the control unit 20 divides a supply prediction value (predicted power generation amount) into a stable portion and an uncertain portion, using the supply probability estimation unit 23. For example, when a value B of a predicted power generation amount in a given time zone is larger than the "stable supply" based on past supply performance data, the control unit 20 specifies a portion of predicted power generation amount that the "stable supply" accounts for, as a "stable portion" and specifies a portion of the same that exceeds the "stable supply", as an "uncertain portion". The "stable portion" is a portion of predicted power generation amount where the possibility of power being actually generated is high. The "uncertain portion" is a portion of predicted power generation amount where whether power will be actually generated is uncertain.

In another case where the value B of the predicted power generation amount is equal to or smaller than the "stable supply", the control unit 20 specifies the whole value B of the predicted power generation amount, as the "stable portion". This is done because, as described above, when past supply performance data is taken into consideration, the possibility of obtaining a generated power value equivalent to the "stable supply" is high. In this manner, for each time zone included in the planning target period, the control unit 20 divides the predicted power generation amount into the "stable portion" and the "uncertain portion" (S206 in FIG. 7).

Subsequently, at step S207, the control unit 20 calculates a stable ratio and an uncertain ratio, using the supply probability estimation unit 23. The "stable ratio" is the ratio of a "stable portion" to the whole predicted power generation amount in a given time zone. The "uncertain ratio" is the ratio of an "uncertain portion" to the whole predicted power generation amount in the given time zone. For example, in a time zone of 07:30 to 08:00 on January 1, 2022 (a prediction target time is 08: 00), a predicted power generation amount is 10 [kWh] (see FIG. 9). It is assumed that this predicted power generation amount of 10 [kWh] consists of the "stable supply" of 6 [kWh] and the "uncertain supply" of 4 [kWh] . In such a case, the control unit 20 specifies the stable ratio as 0.6 and the uncertain ratio as 0.4. For each time zone included in the planning target period, the control unit 20 calculates the stable ratio and the uncertain ratio (S207).

At step S208, the control unit 20 determines whether other supply/procurement sources are present, using the supply probability estimation unit 23. When other supply/procurement sources are present (S208: Yes), the control unit 20 returns to step S201. When other supply/procurement sources are not present (S208: No), the control unit 20 ends a series of steps shown in FIG. 7 (END).

A plurality of supply/procurement sources may include stable supply/procurement sources, such as a cogeneration system and a hydroelectric power generation system. In such a case, the control unit 20 may execute processes of steps S201 to S207 on a stable supply/procurement source as well. Alternately, the control unit 20 may not execute the processes of steps S201 to S207 on a stable supply/procurement source and may set the stable ratio of the stable supply/procurement source in each time zone to 1.0 (stable in all time zones).

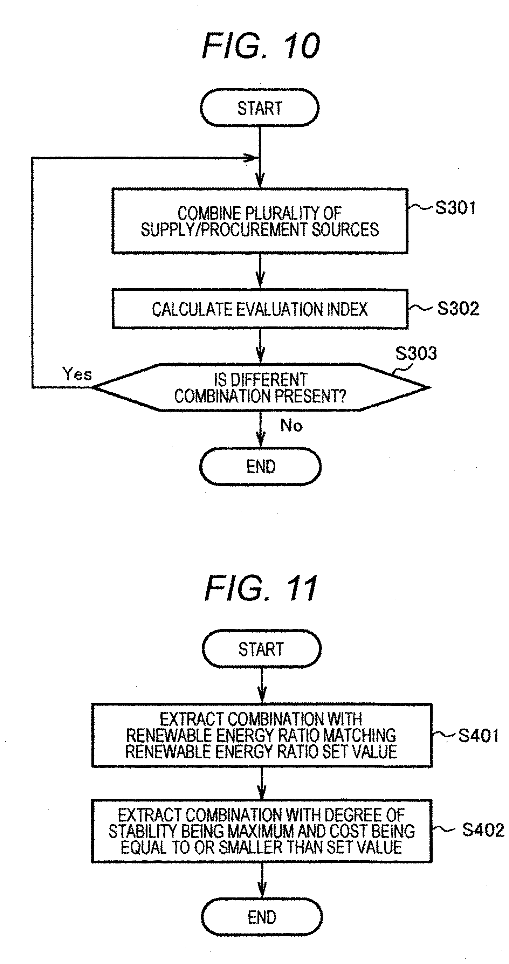

FIG. 10 is a flowchart of a process by the supply combination unit (see also FIG. 1 when necessary).

It is assumed that at "START " in FIG. 10, the process by the supply probability estimation unit 23 (see FIG. 7) has been completed and a stable ratio and an uncertain ratio of each supply/procurement source have been calculated.

At step S301, the control unit 20 combines a plurality of supply/procurement sources, using the supply combination unit 24. Specifically, for each time zone included in the planning target period, the control unit 20 combines a plurality of supply/procurement sources so that a predicted demand-power amount (see FIG. 6) is satisfied. The control unit 20 then properly changes ratios of amounts of power supply from individual supply/procurement sources to make a plurality of combinations.

Specifically, when a predicted demand-power amount in the time zone of 00:00 to 00:30 is 10 [kWh], for example, the control unit 20 sets an amount of power supply from a given supply/procurement source to 3 [kWh] and sets an amount of power supply from a different supply/procurement source to 7 [kWh]. In another case, for example, the control unit 20 sets an amount of power supply from a given supply/procurement source to 4 [kWh] and sets an amount of power supply from a different supply/procurement source to 6 [kWh], thus making a different combination. In this manner, in addition to making a combination of a plurality of supply procurement/sources, the control unit 20 properly changes ratios of amounts of power supply from the combination of supply/procurement sources, thereby making various combinations.

Subsequently, at step S302 of FIG. 10, the control unit 20 calculates an evaluation index for a given combination. As described above, in the first embodiment, a renewable energy ratio, a cost, and a degree of stability are used as evaluation indexes. The control unit 20 calculates a ratio of an amount of power supplied by a supply/procurement source as renewable energy, to a total supply-power amount, as a renewable energy ratio. In addition, the control unit 20 multiples a power unit price by a supply-power amount, and sums up multiplication results in individual time zones to calculate a cost (power cost).

When calculating a degree of stability, the control unit 20 performs a calculation expressed as the following equation (1) on each of supply/procurement sources included in the combination made at step S301. Specifically, the control unit 20 multiplies together a stable ratio $St_i$ of a supply/procurement source $k_j$ in a given time zone $t_i$ and a ratio $Pt_i^{kj}$ representing a ratio of a supply-power amount of the supply/procurement source $k_j$ to the total supply-power amount, and sums up multiplication results for each supply/procurement sources $k_j$ to calculate a sum $SUMt_i$. In the equation, $t_i$ (i=1, 2, 3,...) denotes a time zone that is defined when the planning target period is divided into given time zones. $k_j$ (j=1, 2, 3,...) is a reference sign for distinguishing a plurality of supply/procurement sources from each other.

[Equation 1]

$$ \mathrm{SUM}\, t_i = \sum_j Pt_i^{kj} \times St_i \quad \cdots \quad (1) $$

The sum $SUMt_i$ calculated in this manner indicates a degree of power being stably supplied from a plurality of supply/procurement sources in a given time zone. The control unit 20 then multiplies together the sum $SUMt_i$ related to supply-power in the given time zone and the value of a "stable portion" (S105 in FIG. 3) of a predicted demand-power amount in this time zone, and sums up multiplication results in individual time zones to calculate a degree of stability. "Degree of stability" is a numerical value indicating a degree of power being stably supplied to the consumer (demand side).

At step S303, the control unit 20 determines whether a different combination of a plurality of supply/procurement sources is present. When a different combination of supply/procurement sources is present (S303: Yes), the control unit 20 returns to step S301. When a different combination of supply/procurement sources is not present (S302: No), the control unit 20 ends a series of steps shown in FIG. 10 (END).

FIG. 11 is a flowchart of a process by the plan creating unit (see also FIG. 1 when necessary).

It is assumed that at "START" in FIG. 11, the process by the supply combination unit 24 (see FIG. 10) has been completed.

At step S401, the control unit 20 extracts a combination of supply/procurement sources that satisfies a given renewable energy ratio, using the plan creating unit 25. Specifically, from combinations of supply/procurement sources (see S301 in FIG. 10), the control unit 20 extracts a combination of supply/procurement sources with a renewable energy ratio matching a renewable energy ratio set value received by the plan input unit 21 (see FIG. 2). When the number of combinations with the renewable energy ratio matching the renewable energy ratio set value is smaller than a given value, the control unit 20 extracts a combination with a renewable energy ratio being included in a given allowable range.

Subsequently, at step S402, the control unit 20 extracts a combination with a degree of stability being the maximum and a cost (power cost) being equal to or smaller than a set value, from combinations of supply/procurement sources, using the plan creating unit 25. Such a combination of supply/procurement sources is a combination that satisfies renewable energy ratio and cost conditions set by the user (see FIG. 2) and that maximizes the degree of stability.

In parallel with the process of FIG. 11, the plan creating unit 25 may extract a combination with the cost being the lowest, from combinations of supply/procurement sources with a renewable energy ratio being a preset renewable energy ratio. Then, the control unit 20 may cause the display means 40 to selectively display a power procurement plan adopting a combination with the degree of stability being the highest and a different power procurement plan adopting a combination with the power cost being the lowest in a given planning target period, both combinations being selected from among combinations of supply/procurement sources. Through this process, a combination of supply/procurement sources in a case of giving priority to the cost and giving less consideration to the degree of stability can be presented to the user.

The control unit 20 may calculate a difference in power amount between the demand side and the supply side, as an index used in place of the above degree of stability (or used together with the degree of stability). In this case, as indicated by the following equation (2), the control unit 20 first calculates a future stable supply $Is_{ti}$ by multiplying the sum $SUMt_i$ by a predicted supply-power amount Sfti in the given time zone $t_i$.

[Equation 2]

$$Is_{t\,i} = Sf_{t\,i} \times SUM\,t_i \quad \cdots \quad (2)$$

Then, as indicated by the following equation (3), the control unit 20 calculates a difference $\Delta Als_{ti}$ between a stable demand Asti (stable portion of a demand prediction value) in each time zone $t_i$ that is calculated by the demand probability estimation unit 22 and the stable supply Isti calculated by the plan creating unit 25.

[Equation 3]

$$\Delta Als_{t\,i} = |As_{ti} - Is_{t\,i}| \quad \cdots \quad (3)$$

Calculating such a difference $\Delta Als_{ti}$ makes it possible to know how appropriately power supply matches power demand. The control unit 20 calculates the sum of differences $\Delta Als_{ti}$ in each time zones $t_i$ included in the planning target period. In this case, in place of the process of step S402, the control unit 20 may extract a combination with the sum of the differences $\Delta Als_{ti}$ being the minimum and the cost being equal to or smaller than the set value. In addition, the control unit 20 may cause the display means 40 to additionally display the above-described degree of stability. The greater uncertainty of a supply results in a lower power price in the supply. To a stable demand, therefore, a supply with the maximum degree of stability can be matched. To an uncertain demand, on the other hand, an uncertain supply, in which the power price is expected to be low, can be matched. This offers an effect of keeping overall costs low.

After executing a series of steps shown in FIG. 11, the control unit 20 causes the display means 40 (see FIG. 1) to display a power procurement plan adopting a combination of supply/procurement sources extracted at step S402, using the display control unit 26 (see FIG. 1).

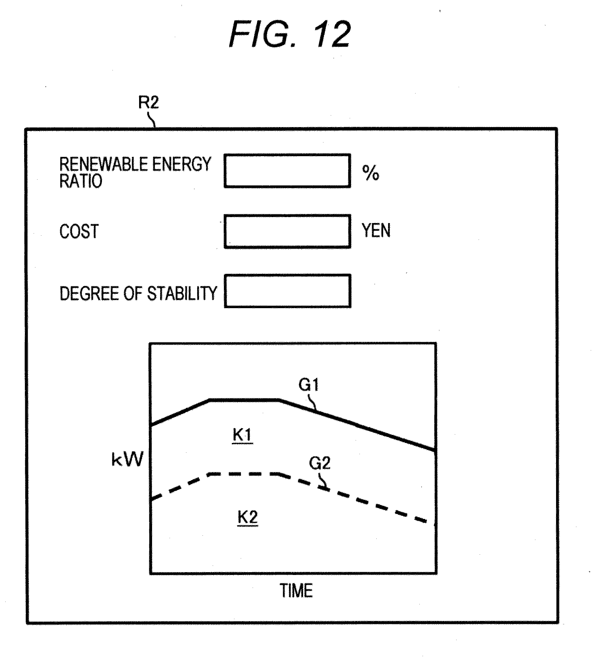

FIG. 12 is an example of a display screen R2 for displaying a power procurement plan created by the power procurement plan creating system.

The display control unit 26 (see FIG. 1) displays values for a renewable energy ratio, a cost, and a degree of stability on the display screen R2 for displaying the power procurement plan, the values being displayed as evaluation indexes of the combination of supply/procurement sources extracted at step S402 (see FIG. 11). The display control unit 26 displays also transition of supply-power at every point of time in the combination of supply/procurement sources, the transition of supply-power being displayed as a supply graph G1 and a division graph G2. In this manner, the control unit 20 carries out a process of causing the display means 40 to display a power procurement plan (the supply graph G1 and division graph G2 in the example of FIG. 12) adopting a combination of supply/procurement sources that are selected out of a plurality of supply/procurement sources serving as power supply sources, based on given evaluation indexes.

The supply graph G1 shown in FIG. 12 indicates transition of supply-power (total amount) at each point of time that results when the combination of the supply/procurement sources extracted at step S402 (see FIG. 11) is adopted. The division graph G2 shown in FIG. 12 represents a line that divides two combinations of supply/procurement sources from each other. In this manner, the control unit 20 causes the display means 40 (see FIG. 1) to display, as a power procurement plan, the supply graph G1 indicating the transition of supply-power to the consumer (demand side) in a given planning target period and the division graph G2 indicating a ratio of supply-power of each of a plurality of supply/procurement sources, to the value of the supply graph G1.

For example, a first area K1 sandwiched between the supply graph G1 and the division graph G2 and a second area K2 including power values smaller than power values represented by the division graph G2 may be displayed in different colors, respectively. This allows the user to easily understand transition of supply-power supplied from each supply/procurement source to a given consumer. FIG. 12 shows an example in which the supply graph G1 and the division graph G2 are displayed as line graphs. These graphs G1 and G2, however, may be displayed in a different form, such as bar graphs or non-graphic numerical values.

In one supply/procurement source, the value of the stable ratio of the supply/procurement source varies at each point of time in many cases. Based on this fact, in each of the first area K1 and the second area K2, the display control unit 26 (see FIG. 1) may display different colors correspond to sizes of the stable ratio of the supply/procurement source to emphasize differences in stable ratio value. This allows the user to understand at a glance how the stable ratio transitions.

<Effects>

According to the first embodiment, a combination of supply/procurement sources is extracted, based on a degree of stability indicating a degree of power being supplied stably to a consumer. As a result, even when the uncertainty of demand-power or supply-power (the possibility of actual measurement value's deviating from a prediction value) exists, a power procurement plan allowing stable power supply to the consumer can be presented to the user. This makes it possible to create a power procurement plan that suppresses emission of greenhouse gases, such as carbon dioxide, thus providing an opportunity to make a social contribution.

According to the first embodiment, a combination of supply/procurement sources is extracted so that the combination satisfies renewable energy ratio and cost conditions set by the user, and the extracted combination of supply/procurement sources is presented to the user as a power procurement plan. This makes the power procurement plan creating system handy and convenient to the user.

<Second Embodiment>

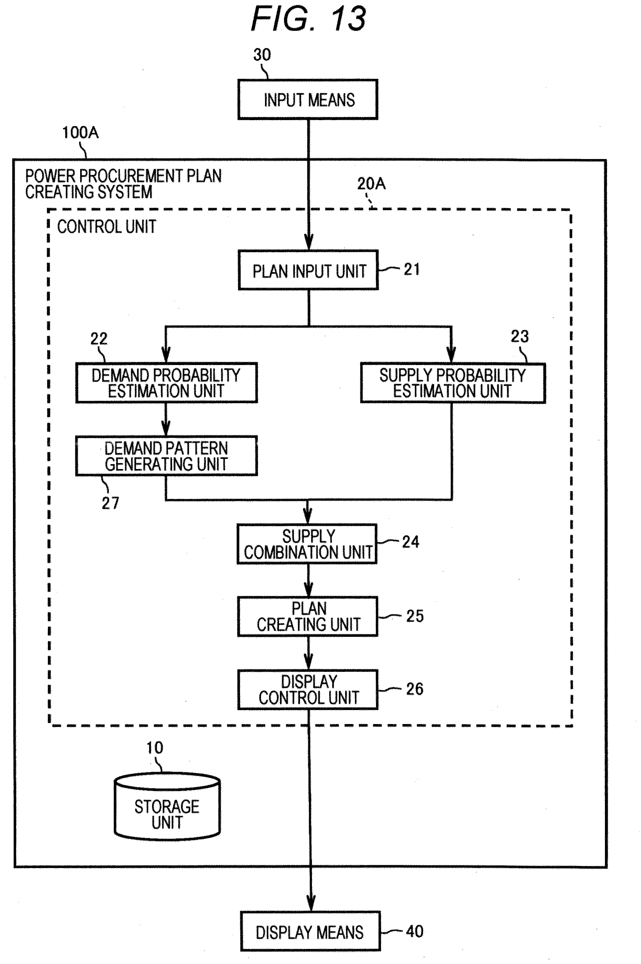

A second embodiment is different from the first embodiment in that a power procurement plan creating system 100A (see FIG. 13) carries out a given process, based on the degree of importance of each of the consumer's facilities. The second embodiment is different from the first embodiment also in that the power procurement plan creating system 100A (see FIG. 13) includes a demand pattern generating unit 27 (see FIG. 13). Other constituent elements of the second embodiment are the same as those of the first embodiment (see FIG. 1). Therefore, differences from the first embodiment will be described but the same part as that of the first embodiment will not be described.

FIG. 13 is a functional block diagram including the power procurement plan creating system 100A according to the second embodiment.

A control unit 20A of the power procurement plan creating system 100A shown in FIG. 13 includes the plan input unit 21, the demand probability estimation unit 22, the supply probability estimation unit 23, the supply combination unit 24, the plan creating unit 25, the display control unit 26, and the demand pattern generating unit 27.

The demand probability estimation unit 22 divides a predicted demand-power amount of each of the consumer's facilities into a "stable portion" and an "uncertain portion". The "facilities" mentioned here are given facilities of which demand-power amounts in each time zone can be predicted, such as an air conditioning system and a server in an office building.

It should be noted that setting all the consumer's facilities prediction targets is unnecessary. For example, there may be a facility of which demand-power cannot be predicted for the reason of power being not measured or the like, and such a facility may be classified into "other facilities". There may be another case where a mobile body (not illustrated), such as an electric vehicle, is included in a given consumer's facilities. Hereinafter, the case where the mobile body is included in the consumer's facilities will be described.

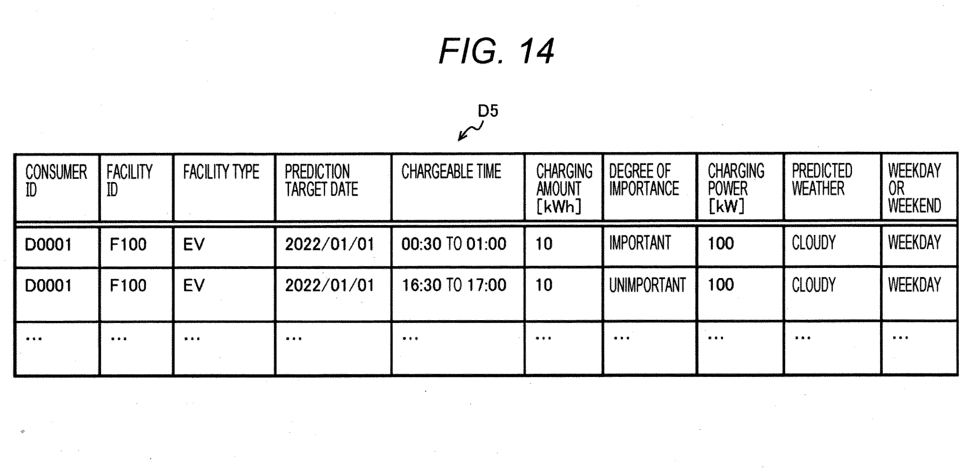

For the mobile body (not illustrated), a given chargeable time is set in advance as a time zone in which a battery (not illustrated) can be charged. For example, in a case where the chargeable time is 12: 00 to 17: 00, the time zone for charging the battery can be changed properly proving that the time zone is included in this chargeable time. In other words, an administrator or the like can adjust timing of actually charging the battery within the chargeable time. In this manner, for a facility (mobile body or the like) with a charging schedule that can be changed, a chargeable time (see FIG. 14) is used in place of the prediction target time when demand-power of the facility is predicted.

In the second embodiment, "degree of importance", which indicates whether supplying power to the facility in a given time zone is necessary, is used as an index indicative of priority in power supply. For example, the same facility may have these different time zones: a time zone in which the facility needs to be supplied with power and a time zone in which the facility has no particular need of being supplied with power.

It should be noted that supply/procurement sources include a storage battery (not illustrated) charged with power generated by a renewable energy generation system, a cogeneration system, or the like.

FIG. 14 is an explanatory diagram showing an example of demand prediction data D5 in the power procurement plan creating system according to the second embodiment.

In the example of FIG. 14, a given facility ID and a facility type are stored in advance in the storage unit 10 (see FIG. 13), the facility ID and facility type being association with a consumer ID. Other items of data, such as a prediction target date and a chargeable time of demand-power, a charge amount, a degree of importance ("important" or "unimportant"), charging power, predicted weather, and weekday or weekend, are also stored in the storage unit 10 (see FIG. 13) as demand prediction data.

A charge amount of the mobile body (not illustrated) is divided into a required charge amount and a surplus charge amount. The required charge amount is a lower limit SoC value for preventing the state of charge (SoC) of the battery of the mobile body from dropping below a specified value, and is set in advance. The surplus charge amount is a value given by subtracting the required charge amount from the charge amount of the battery. In the category of the degree of importance of power supply, the required charge amount is classified as "important" and the surplus charge amount is classified as "unimportant".

The demand pattern generating unit 27 shown in FIG. 13 generates a plurality of demand patterns by summing up facility demand prediction values Dfi (where i denotes each facility and i=0, 1, 2, 3,...). The facility demand prediction value Dfi is a predicted demand-power amount of the consumer's facility in each time zone. When calculating the facility demand prediction value Dfi, the demand pattern generating unit 27 first calculates the sum of facility demand prediction values Dfi of facilities other than a facility equipped with a battery (e.g., a mobile body), for each time zone included in a planning target period.

The demand pattern generating unit 27 then generates a plurality of charging patterns for the facility equipped with a battery. In other words, the demand pattern generating unit 27 generates a plurality of charging patterns different in charging timing within the chargeable time of the mobile body.

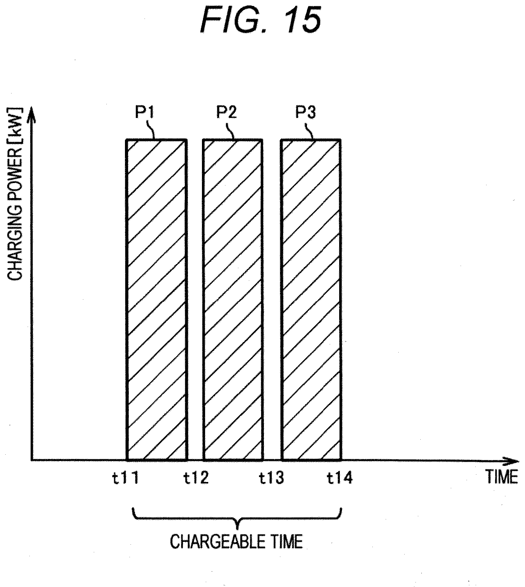

FIG. 15 is an explanatory diagram showing a chargeable time and charging timing of a battery of a mobile body.

In FIG. 15, the horizontal axis represents time and the vertical axis represents charging power to the battery. As shown in FIG. 15, different charging patterns are present in the given chargeable time, the charging patterns including a first charging pattern P1 for carrying out charging in a time zone ranging from time t11 to time t12 and a second charging pattern P2 and a third charging pattern P3 for carrying out charging in different time zones as well. The demand pattern generating unit 27 generates a plurality of charging patterns in such a manner, and, for each charging pattern, calculates a facility demand prediction value Dfi in each time zone.

Then, for each time zone included in the planning target period, the demand pattern generating unit 27 calculates the sum of a facility demand prediction value Dfi of a mobile body or the like equipped with a battery and facility demand prediction values Dfi of the other facilities, thereby generating a demand pattern. Because there are a plurality of battery charging patterns, a plurality of demand patterns are generated, too, the demand patterns each indicating transition of the overall predicted demand-power amount of the consumer.

As described above, the demand probability estimation unit 22 divides the predicted demand-power amount of the consumer's each facility into the "stable portion" and the "uncertain portion". In addition, data items of "important" or "unimportant" are associated with power demand of each facility (see FIG. 14). Based on these four pieces of attribute information, the demand pattern generating unit 27 classifies the demand-power amount of the facility in each time zone in the following manner. Specifically, the demand pattern generating unit 27 determines whether the demand-power amount of the facility in each time zone corresponds to "stable and important" or "stable and unimportant" or "uncertain and important" or "uncertain and unimportant", and calculates a power amount corresponding to each of these attributes.

A process the supply combination unit 24 shown in FIG. 13 carried out is the same as the process carried out by the supply combination unit 24 in the first embodiment. However, because a plurality of demand patterns are present, the supply combination unit 24 makes a combination of supply/procurement sources in correspondence to each demand pattern.

In the same manner as in the first embodiment, the plan creating unit 25 specifies a given supply combination, based on, for example, three evaluation indexes of a renewable energy ratio, a cost, and a degree of stability, and creates a future power procurement plan. More specifically, the plan creating unit 25 generates a plurality of demand patterns for a given supply combination, and calculates a degree of stability in each of the demand patterns.

In addition to the stability of power demand and power supply, the plan creating unit 25 may consider the viewpoint of the degree of importance as well, and may carry out the following process. Specifically, for a demand corresponding to "stable and important ", the plan creating unit 25 calculates a difference $\Delta Afls_{ti}$ between a "stable and important " demand $Asti$ included in the facility demand prediction value $Dft_i$ in each time zone $t_i$ and a stable supply $ISti$, as indicated in the following equation (4) . The stable supply $IS_{ti}$ is calculated by equation (2) described in the first embodiment.

[Equation 4]

$$\Delta\text{Afl}s_{t\,i} = |At_i - \text{Is}_{t\,i}| \quad \cdot \cdot \cdot \quad (4)$$

Regarding an "uncertain and important " demand, the plan creating unit 25 carried out the following process. Specifically, for each time zone $t_i$, the plan creating unit 25 multiplies together a supply ratio $\text{SUMBt}_i$, which represents a ratio of supply from a storage battery (not illustrated) to the whole supply from a given supply combination, and a predicted supply-power amount $Sf_{ti}$, thereby calculating power supply Ibsti from the storage battery. As described above, the storage battery (not illustrated) is a secondary battery charged with power generated by a renewable energy generation system, a cogeneration system, or the like, and is different from a battery (not illustrated) incorporated in a mobile body or the like of the demand side.

[Equation 5]

$$\text{Ibs}_{t\,i} = Sf_{t\,i} \times \text{SUM B}t_i \quad \cdot \cdot \cdot \quad (5)$$

The plan creating unit 25 then calculates a difference $\Delta\text{AIbs}_{ti}$ between an "uncertain and important" demand $As_{ti}$ included in the facility demand prediction value $Dft_i$ in each time zone $t_i$ and the power supply $\text{Ibs}_{ti}$ from the storage battery, as indicated in the following equation (6).

[Equation 6]

$$\Delta\text{AIbs}_{t\,i} = |As_{ti} - \text{Ibs}_{t\,i}| \quad \cdot \cdot \cdot \quad (6)$$

Subsequently, the plan creating unit 25 calculates the sum of the difference $\Delta\text{Afl}_{ti}$ given by equation (4) and the difference $\Delta\text{AbI}_{ti}$ given by equation (6) for each time zone included in the planning target period, and then calculates the total sum of the calculated sums in each time zone. The plan creating unit 25 may extract a combination with this total sum (total sum in each time zone) being the minimum and the cost being equal to or smaller than a set value. In short, the control unit 20A creates a power procurement plan that allocates stable power supply to an important and stable power demand among power demands in a given time zone included in the planning target period and that allocates power supply from a storage battery (not illustrated) to an important and uncertain power demand among the power demands. Creating such a power procurement plan allows power supply that meets the "stable and important" demand and the "uncertain and important" demand as well. A stable demand and an uncertain demand are calculated based on demand prediction data obtained when power demand is predicted in the past and on demand performance data. In addition, the control unit 20A may cause the display means 40 to additionally display the above-mentioned degree of stability.

<Effects>

According to the second embodiment, a power procurement plan is created based on data indicating whether the demand-power amount of the consumer's facility corresponds to "important" or "unimportant". As a result, for example, stable supply-power is allocated to a "stable and important" demand, while supply-power from the storage battery (not illustrated) is allocated to an "uncertain and important" demand. Hence a power procurement plan allowing stable power supply to an important demand is created.

<<Third Embodiment>>

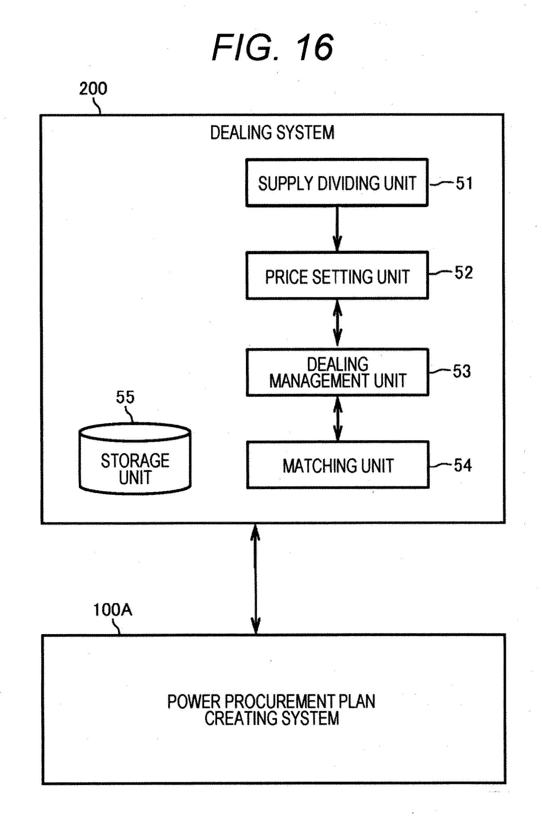

A third embodiment is different from the second embodiment in that the power procurement plan creating system 100A (see FIG. 16) works in cooperation with a dealing system 200 (see FIG. 16). The configuration and the like of the power procurement plan creating system 100A of the third embodiment are the same as those of the power procurement plan creating system 100A of the second embodiment (see FIG. 1). Therefore, differences from the second embodiment will be described but the same part as that of the second embodiment will not be described.

FIG. 16 is a configuration diagram of the power procurement plan creating system 100A and the dealing system 200 according to the third embodiment.

The dealing system 200 has a function of mediating a dealing (trading of power to be used in the future) between the power demand side and the power supply side and a function of adjusting a power unit price as well. When a power dealing (contract) is made between the demand side and the supply side, power is supplied from a given supply/procurement source to a consumer via a power transmission facility (not illustrated), a power distribution facility (not illustrated), or the like.

As shown in FIG. 16, the dealing system 200 includes a supply dividing unit 51, a price setting unit 52, a dealing management unit 53, a matching unit 54, and a storage unit 55. The dealing system 200 makes communication with the power procurement plan creating system 100A on a necessary basis.

The supply dividing unit 51 divides a predicted supply-power amount from a supply/procurement source in each time zone into a "stable portion " and an "uncertain portion", and further classifies the divided portions by power supply source type. The process of dividing the predicted supply-power amount into the "stable portion" and the "uncertain portion" is the same process carried out in the second embodiment. In addition, the power procurement plan creating system 100A may calculate each evaluation index, based on process results from the supply dividing unit 51.

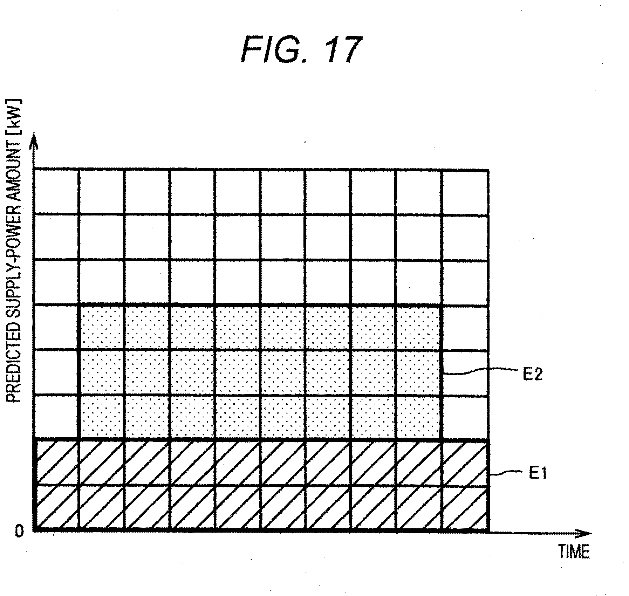

FIG. 17 is an explanatory diagram showing an example of power amount division by the power procurement plan creating system.

The horizontal axis in FIG. 17 represents time. The vertical axis in FIG. 17 represents predicted supply-power from a given supply/procurement source. For example, as shown in FIG. 17, the supply dividing unit 51 segments an area of time-sequence transition of the predicted supply-power into a group of squares and then divides the group of squares into a subgroup representing a stable portion E1 and a subgroup representing an uncertain portion E2. As a result, for example, an electric power charge can be associated with one square, which makes it easy to standardize calculation of electric power charges and adjustment of an electric power unit price.

The price setting unit 52 shown in FIG. 16 adjusts the electric power unit price to a given price, based on information on a quoted price presented by the power supply side or the like. The dealing management unit 53 sequentially transmits the adjusted power unit price to the power procurement plan creating system 100 A via an interface (not illustrated) and a network (not illustrated). In addition, the dealing management unit 53 properly updates a power amount indicating an amount of power scheduled to be supplied from each supply/procurement source, based on a contract between the power demand side and the power supply side. The matching unit 54 manages matching between other customers and supply/procurement sources, based on bidding or the like.

The power procurement plan creating system 100A shown in FIG. 16 reflects data received from the dealing system 200, in a power procurement plan. Specifically, the power procurement plan creating system 100A changes a power unit price indicated by supply prediction data (see FIG. 9) to a power unit price newly received from the dealing system 200 and then creates a power procurement plan. The power procurement plan creating system 100A may create the power procurement plan so that out of a predicted supply-power amount, an uncertain supply-power amount (supply-power amount requiring lower cost) is supplied more than a power amount demanded by the demand side. This ensures that the uncertain supply-power amount provides stable power supply.

The dealing system 200 adjusts a power unit price, based on a matching rate between the power demand side and the power supply side, and transmits data on the adjusted power unit price to the power procurement plan creating system 100 A. The "matching rate " is a value given by dividing a total sum of predicted supply-power amounts in a case of reflecting a contract between the power demand side and the power supply side in a power procurement plan in a given planning target period, by a total sum of power amounts that can be supplied from a plurality of supply/procurement sources to the demand side.

For example, the price setting unit 52 of the dealing system 200 calculates an amount of adjustment of the power unit price, the amount of adjustment maximizing a variation in the matching rate, based on past actual supply data and matching rate history data, and adds the calculated amount of adjustment to the previous power unit price. This facilitates dealing in power supply/distribution between the power demand side and the power supply side, encouraging them to make a new power supply contract. The price setting unit 52 may calculate a matching rate for stable supply and a different matching rate for uncertain supply and adjust the power price, based on each matching rate.

<Effects>

According to the third embodiment, the dealing system 200 adjusts a power unit price, based on a history of power demand and supply. As a result, imbalance in power dealing between the power demand side and the power supply side (difference between an amount of power demand and an amount of power supply) can be reduced.

(Modification)

The power procurement plan creating systems 100 and 100A and the power dealing system 200 according to the present invention have been described in the above embodiments. The present invention, however, is not limited to the description of these embodiments and may be modified into various forms.

For example, in each embodiment, the process (S402) executed by the control unit 20, the process being extracting the combination of supply/procurement sources with the given renewable energy ratio being met (S401 in FIG. 11), the degree of stability being the maximum, and the cost being equal to or smaller than the set value, has been described, but the process by the control unit 20 is not limited to this process. The control unit 20 may cause the display means 40 to display a power procurement plan adopting the combination with the degree of stability being the highest. In this case, the renewable energy ratio and the cost may be included or may not be included in the evaluation indexes. The method of calculating the degree of stability shown in each embodiment is an example. The method of calculating the degree of stability, therefore, is not limited to this example.

In addition, for example, the control unit 20 may cause the display means 40 to display a power procurement plan adopting a combination with the renewable energy ratio being within a set range and the degree of stability being the highest, the combination being adopted from among combinations of supply/procurement sources.

In another case, for example, the control unit 20 may cause the display means 40 to display a power procurement plan adopting a combination with the power cost in a given planning target period being equal to or smaller than a set value and the degree of stability being the highest, the combination being adopted from among

As an evaluation index, one or more of the renewable energy ratio, the cost, and the degree of stability may be selected by the user's operation on the input means 30, and the control unit 20 may create a power procurement plan, based on the selected evaluation index.

In each embodiment, the case of narrowing down combinations of the supply/procurement sources to a specific combination of the supply/procurement sources as a power procurement plan has been described, but the present invention is not limited this case. For example, the control unit 20 may be allowed to select a power procurement plan according to the order of each degree of stability and may display a power procurement plan, based on a combination (combination of supply/procurement sources) corresponding to a degree of stability selected by an operation on the input means 30.

In each embodiment, for each of a plurality of supply/procurement sources included in a given combination, the case where the ratio of a supply-power amount in each time zone (the ratio of a supply-power amount to the total sum of supply-power amounts supplied to a given consumer) is constant has been described, but the present invention is not limited to this case. Specifically, each of the supply/procurement sources may supply power such that the ratio of the supply-power amount in each time zone may change with time.

In the second embodiment, the case of the mobile body equipped with the battery being an electric vehicle has been described, but the present invention is not limited to this case. For example, the mobile body may be a hybrid vehicle that can be charged by a plug-in charger and may also be a two-wheeled vehicle or a three-wheeled vehicle that runs on electricity. Each embodiment can be applied not only to vehicles but also to mobile bodies for transportation in the sea, land, and air, such as non-electrified railway cars, ships, aircrafts, and agricultural machines. The above-mentioned aircrafts include an unmanned aircraft and a drone.

In the second embodiment, the case where a power procurement plan is created so that power is supplied to a "stable and important" demand and an "uncertain and important" demand as well has been described, but the present invention is not limited to this case. For example, a power procurement plan may be created so that with no specific categories of "important" and "unimportant" being set, the control unit 20A (see FIG. 13) allocates a stable supply to a stable demand and allocates a power supply from the storage battery to an uncertain demand.

In the second embodiment, the case where data of "important" or "unimportant" is used as data indicating a degree of importance of power supply to the consumer's facility has been described. However, for example, the degree of importance may be expressed as a given numerical value.

Embodiments may be combined with each other in a proper manner. For example, a combination of the first and second embodiments and a combination of the first and third embodiments are possible.

The process executed by the power procurement plan creating system 100 or the like (the power procurement plan creating method or the like) may be executed as a given program, by a computer. The above program can be provided via a communication line or can be distributed as a program written on a recording medium, such as a CD-ROM.

Each of the above embodiments has been described in detail for easy understanding of the present invention, and is not necessarily limited to an embodiment including all the constituent elements described above. Some of constituent elements of an embodiment can be deleted therefrom or add to or replaced with constituent elements of another embodiment. A group of mechanisms and constituent elements considered to be necessary for description are described above, and all mechanisms and constituent elements making up the product are not necessarily described.

Reference Signs List

| | |
|---|---|
| 10 | storage unit |
| 20, 20A | controller unit |
| 21 | plan input unit |
| 22 | demand probability estimation unit |
| 23 | supply probability estimation unit |
| 24 | supply combination unit |
| 25 | plan creating unit |
| 26 | display control unit |
| 27 | demand pattern generating unit |
| 30 | input means |
| 40 | display means |
| 51 | supply dividing unit |
| 52 | price setting unit |
| 53 | dealing management unit |
| 54 | matching unit |
| 55 | storage unit |
| 100, 100A | power procurement plan creating system |
| 200 | power dealing system |
| G1 | supply graph |
| G2 | division graph |
| R2 | display screen |

**Claims**

1. A power procurement plan creating system comprising a control unit that causes a display means to display a power procurement plan adopting a combination of supply/procurement sources, the combination being selected based on a given evaluation index, from among a plurality of supply/procurement sources that are power supply sources, wherein the evaluation index includes a degree of stability that indicates a degree of stable supply of power to a demand side.

2. The power procurement plan creating system according to claim 1, wherein
the control unit displays the degree of stability on a display screen for displaying the power procurement plan.

3. The power procurement plan creating system according to claim 1, wherein
the control unit causes the display means to display the power procurement plan adopting a combination with the degree of stability being highest.

4. The power procurement plan creating system according to claim 3, wherein

the control unit causes the display means to display the power procurement plan adopting a combination with a renewable energy ratio being within a set range and the degree of stability being highest, the combination being adopted from among combinations of the supply/procurement sources, and wherein
the renewable energy ratio is a ratio of a power amount supplied by the supply/procurement sources as renewable energy, to a total of supply-power amounts supplied to a demand side in a given planning target period.

5. The power procurement plan creating system according to claim 3, wherein
the control unit causes the display means to display the power procurement plan adopting a combination with a power cost in a given planning target period being equal to or smaller than a set value and the degree of stability being highest, the combination being adopted from among combinations of the supply/procurement sources.

6. The power procurement plan creating system according to claim 1, wherein
the control unit causes the display means to selectively display the power procurement plan adopting a combination with the degree of stability being highest and a different power procurement plan adopting a combination with a power cost in a given planning target period being lowest, both combinations being adopted from among combinations of the supply/procurement sources.

7. The power procurement plan creating system according to claim 1, wherein
the control unit causes the display means to display, as the power procurement plan, a supply graph showing transition of supply-power to a demand side in a given planning target period and a division graph showing a ratio of supply-power from each of the plurality of supply/procurement sources to a value of the supply graph.

8. The power procurement plan creating system according to claim 1, wherein

the supply/procurement sources include a storage battery, wherein
the control unit creates the power procurement plan so that a stable supply is allocated to an important and stable demand among power demands in a given time zone included in a given planning target period and that power supply from the storage battery is allocated to an important and uncertain demand among the power demands in the given time zone included in the given planning target period, and wherein
the stable demand and the uncertain demand are calculated based on demand prediction data and demand performance data resulting from a past power demand prediction.

9. A dealing system that communicates with the power procurement plan creating system according to any one of claim 1 to claim 8, wherein

the dealing system adjusts a power unit price, based on a matching rate between a power demand side and a power supply side, and wherein
the matching rate is a value given by dividing a total sum of predicted supply-power amounts in a case of reflecting a contract between the power demand side and the power supply side in a given planning target period, by a total sum of power amounts that can be supplied from a plurality of the supply/procurement sources to the power demand side.

10. A power procurement plan creating method comprising a process of causing a display means to display a power procurement plan adopting a combination of supply/procurement sources, the combination being selected based on a given evaluation index, from among a plurality of supply/procurement sources that are power supply sources, wherein
the evaluation index includes a degree of stability that indicates a degree of stable supply of power to a demand side.

11. A program for causing a computer to execute the power procurement plan creating method according to claim 10.

# FIG. 1

## FIG. 2

R1

SET PLAN TARGET PERIOD          F2

FROM [          ]          [          ]
              F1

TO [          ]          [          ]
        F3              F4

SET EVALUATION INDEX

    RENEWABLE ENERGY  [          ] %
    RATIO

    COST  [          ] YEN OR LESS

REFERENCE INFORMATION

    ROUGHLY ESTIMATED  [          ] YEN
    COST

    HISTORY AVERAGE  [          ] YEN
    COST

EP 4 443 699 A1

# FIG. 3

START

READ DEMAND PERFORMANCE DATA ～S101

SELECT DATA IN GIVEN PERIOD ～S102

CALCULATE AVERAGE DEMAND
AND STANDARD DEVIATION ～S103

CALCULATE STABLE DEMAND
AND UNCERTAIN DEMAND ～S104

DIVIDE DEMAND PREDICTION VALUE
INTO STABLE PORTION
AND UNCERTAIN PORTION ～S105

END

18

# FIG. 4

D1

| CONSUMER ID | PREDICTION TARGET DATE | PREDICTION TARGET TIME | PREDICTED DEMAND-POWER AMOUNT [kWh] | ACTUAL DEMAND-POWER AMOUNT [kWh] | WEATHER | WEEKDAY OR WEEKEND |
|---|---|---|---|---|---|---|
| D0001 | 2021/01 /01 | 00:30 | 10 | 8 | CLOUDY | WEEKDAY |
| D0001 | 2021/01 /01 | 01:00 | 10 | 9 | CLOUDY | WEEKDAY |
| D0001 | 2021/01 /01 | 01:30 | 10 | 9 | CLOUDY | WEEKDAY |
| D0001 | 2021/01 /01 | 02:00 | 10 | 10 | CLOUDY | WEEKDAY |
| D0001 | 2021/01 /01 | 02:30 | 10 | 9 | CLOUDY | WEEKDAY |
| D0001 | 2021/01 /01 | 03:00 | 10 | 11 | SUNNY | WEEKDAY |
| D0001 | 2021/01 /01 | 03:30 | 10 | 8 | SUNNY | WEEKDAY |
| ... | ... | ... | ... | ... | ... | ... |

# FIG. 5

# FIG. 6

D2

| CONSUMER ID | PREDICTION TARGET DATE | PREDICTION TARGET TIME | PREDICTED DEMAND-POWER AMOUNT [kWh] | PREDICTED WEATHER | WEEKDAY OR WEEKEND |
|---|---|---|---|---|---|
| D0001 | 2022/01 /01 | 00:30 | 10 | CLOUDY | WEEKDAY |
| D0001 | 2022/01 /01 | 01:00 | 10 | CLOUDY | WEEKDAY |
| D0001 | 2022/01 /01 | 01:30 | 10 | CLOUDY | WEEKDAY |
| D0001 | 2022/01 /01 | 02:00 | 10 | CLOUDY | WEEKDAY |
| D0001 | 2022/01 /01 | 02:30 | 10 | CLOUDY | WEEKDAY |
| D0001 | 2022/01 /01 | 03:00 | 10 | SUNNY | WEEKDAY |
| D0001 | 2022/01 /01 | 03:30 | 10 | SUNNY | WEEKDAY |
| ... | ... | ... | ... | ... | ... |

## FIG. 7

```
              START
                │
        ┌───────▼────────────────────────┐
    ┌──▶│ SELECT SUPPLY/PROCUREMENT SOURCE │──── S201
    │   └───────┬────────────────────────┘
    │           │
    │   ┌───────▼────────────────┐
    │   │ READ SUPPLY PERFORMANCE DATA │──── S202
    │   └───────┬────────────────┘
    │           │
    │   ┌───────▼────────────┐
    │   │ SELECT DATA IN GIVEN PERIOD │──── S203
    │   └───────┬────────────┘
    │           │
    │   ┌───────▼────────────┐
    │   │ CALCULATE AVERAGE SUPPLY │──── S204
    │   │ AND STANDARD DEVIATION │
    │   └───────┬────────────┘
    │           │
    │   ┌───────▼────────────┐
    │   │ CALCULATE STABLE SUPPLY │──── S205
    │   │ AND UNCERTAIN SUPPLY │
    │   └───────┬────────────┘
    │           │
    │   ┌───────▼────────────┐
    │   │ DIVIDE SUPPLY PREDICTION VALUE │──── S206
    │   │ INTO STABLE PORTION │
    │   │ AND UNCERTAIN PORTION │
    │   └───────┬────────────┘
    │           │
    │   ┌───────▼────────────┐
    │   │ CALCULATE STABLE RATIO │──── S207
    │   │ AND UNCERTAIN RATIO │
    │   └───────┬────────────┘
    │           │                               S208
    │  Yes  ◇───▼──────────────────────────◇
    └───────┤ IS DIFFERENT SUPPLY/PROCUREMENT │
            ◇ SOURCE PRESENT?                 ◇
                │ No
                ▼
              END
```

## FIG. 8

D3

| SUPPLIER ID | PREDICTION TARGET DATE | PREDICTION TARGET TIME | PREDICTED SUPPLY-POWER AMOUNT [kWh] | ACTUAL SUPPLY-POWER AMOUNT [kWh] |
|---|---|---|---|---|
| S0001 | 2021/01/01 | 00:30 | 0 | 8 |
| S0001 | 2021/01/01 | 01:00 | 0 | 9 |
| S0001 | ... | ... | ... | ... |
| S0001 | 2021/01/01 | 08:00 | 10 | 5 |
| S0001 | 2021/01/01 | 08:30 | 15 | 7 |
| S0001 | 2021/01/01 | 09:00 | 20 | 5 |
| S0001 | 2021/01/01 | 09:30 | 25 | 9 |
| ... | ... | ... | ... | ... |

## FIG. 9

D4

| SUPPLIER ID | PREDICTION TARGET DATE | PREDICTION TARGET TIME | PREDICTED POWER GENERATION AMOUNT [kWh] | POWER PRICE [¥/kWh] |
|---|---|---|---|---|
| S0001 | 2022/01/01 | 00:30 | 0 | 5 |
| S0001 | 2022/01/01 | 01:00 | 0 | 5 |
| S0001 | ... | ... | ... | 5 |
| S0001 | 2022/01/01 | 08:00 | 10 | 5 |
| S0001 | 2022/01/01 | 08:30 | 15 | 5 |
| S0001 | 2022/01/01 | 09:00 | 20 | 5 |
| S0001 | 2022/01/01 | 09:30 | 25 | 5 |
| ... | ... | ... | ... | ... |

## FIG. 10

```
                    ┌─────────────┐
                    │    START    │
                    └──────┬──────┘
                           │
        ┌──────────────────┤
        │                  ▼
        │         ┌─────────────────────────┐
        │         │   COMBINE PLURALITY OF   │──── S301
        │         │ SUPPLY/PROCUREMENT SOURCES│
        │         └────────────┬─────────────┘
        │                      │
        │                      ▼
        │         ┌─────────────────────────┐
        │         │ CALCULATE EVALUATION INDEX│──── S302
        │         └────────────┬─────────────┘
        │                      │      S303
        │                      ▼
        │  Yes  ╱─────────────────────────╲
        └──────┤      IS DIFFERENT          │
               ╲   COMBINATION PRESENT?    ╱
                ╲─────────────┬───────────╱
                              │  No
                              ▼
                    ┌─────────────┐
                    │     END     │
                    └─────────────┘
```

## FIG. 11

```
                    ┌─────────────┐
                    │    START    │
                    └──────┬──────┘
                           │
                           ▼
        ┌──────────────────────────────────┐
        │     EXTRACT COMBINATION WITH       │
        │ RENEWABLE ENERGY RATIO MATCHING    │──── S401
        │   RENEWABLE ENERGY RATIO SET VALUE │
        └────────────────┬───────────────────┘
                         │
                         ▼
        ┌──────────────────────────────────┐
        │  EXTRACT COMBINATION WITH DEGREE OF │
        │ STABILITY BEING MAXIMUM AND COST BEING│──── S402
        │  EQUAL TO OR SMALLER THAN SET VALUE │
        └────────────────┬───────────────────┘
                         │
                         ▼
                    ┌─────────────┐
                    │     END     │
                    └─────────────┘
```

# FIG. 12

R2

RENEWABLE ENERGY RATIO [          ] %

COST [          ] YEN

DEGREE OF STABILITY [          ]

# FIG. 13

30

INPUT MEANS

100A

POWER PROCUREMENT PLAN
CREATING SYSTEM

20A

CONTROL UNIT

PLAN INPUT UNIT — 21

22

DEMAND PROBABILITY
ESTIMATION UNIT

23

SUPPLY PROBABILITY
ESTIMATION UNIT

DEMAND PATTERN
GENERATING UNIT

27

SUPPLY
COMBINATION UNIT — 24

PLAN
CREATING UNIT — 25

DISPLAY
CONTROL UNIT — 26

10

STORAGE
UNIT

DISPLAY MEANS — 40

## FIG. 14

D5

| CONSUMER ID | FACILITY ID | FACILITY TYPE | PREDICTION TARGET DATE | CHARGEABLE TIME | CHARGING AMOUNT [kWh] | DEGREE OF IMPORTANCE | CHARGING POWER [kW] | PREDICTED WEATHER | WEEKDAY OR WEEKEND |
|---|---|---|---|---|---|---|---|---|---|
| D0001 | F100 | EV | 2022/01/01 | 00:30 TO 01:00 | 10 | IMPORTANT | 100 | CLOUDY | WEEKDAY |
| D0001 | F100 | EV | 2022/01/01 | 16:30 TO 17:00 | 10 | UNIMPORTANT | 100 | CLOUDY | WEEKDAY |
| ... | ... | ... | ... | ... | ... | ... | ... | ... | ... |

EP 4 443 699 A1

# FIG. 15

# FIG. 16

200

**DEALING SYSTEM**

SUPPLY DIVIDING UNIT — 51

PRICE SETTING UNIT — 52

DEALING MANAGEMENT UNIT — 53

55

STORAGE UNIT

MATCHING UNIT — 54

100A

POWER PROCUREMENT PLAN CREATING SYSTEM

# FIG. 17

## INTERNATIONAL SEARCH REPORT

| International application No. |
|---|
| **PCT/JP2022/036336** |

**A.    CLASSIFICATION OF SUBJECT MATTER**

*H02J 13/00*(2006.01)i; *G06Q 50/06*(2012.01)i; *G06Q 50/26*(2012.01)i; *H02J 3/00*(2006.01)i; *H02J 3/38*(2006.01)i
FI:    G06Q50/06; H02J3/38 120; H02J3/00 130; H02J3/00 170; H02J3/00 180; H02J13/00 301J; G06Q50/26

According to International Patent Classification (IPC) or to both national classification and IPC

**B.    FIELDS SEARCHED**

Minimum documentation searched (classification system followed by classification symbols)
G06Q50/06; G06Q50/26; H02J3/00; H02J3/38; H02J13/00

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-149282 A (KDDI CORP.) 27 September 2021 (2021-09-27) paragraphs [0023]-[0050] | 1-3, 5-7, 10-11 |
| Y | paragraphs [0023]-[0050] | 4, 9 |
| A | entire text, all drawings | 8 |
| Y | JP 2021-39699 A (HITACHI, LTD.) 11 March 2021 (2021-03-11) paragraphs [0053]-[0055] | 4 |
| A | entire text, all drawings | 1-3, 5-11 |
| Y | JP 2019-82935 A (HITACHI, LTD.) 30 May 2019 (2019-05-30) paragraph [0085] | 9 |
| A | entire text, all drawings | 1-8, 10-11 |

| ☐ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 November 2022** | **22 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/036336**

| Patent document cited in search report | | | Publication date (day/month/year) | Patent family member(s) | Publication date (day/month/year) |
|---|---|---|---|---|---|
| JP | 2021-149282 | A | 27 September 2021 | (Family: none) | |
| JP | 2021-39699 | A | 11 March 2021 | (Family: none) | |
| JP | 2019-82935 | A | 30 May 2019 | US 2019/0130423 A1 paragraph [0136] | |

Form PCT/ISA/210 (patent family annex) (January 2015)

**REFERENCES CITED IN THE DESCRIPTION**

**Patent documents cited in the description**

- JP 2021039699 A